# EUROPÄISCHE PATENTSCHRIFT

(11) **EP 2 287 045 B1**
(45) Veröffentlichungstag und Bekanntmachung des Hinweises auf die Patenterteilung: **30.07.2014**
(21) Anmeldenummer: 10466019.6
(22) Anmeldetag: 11.08.2010
(51) Int. Cl.: B60R 5/04

(54) **Verschiebbarer Ladeboden**
Slideable load area
Sols de chargement déplaçables

(30) Priorität: 19.08.2009 CZ 20090551
(43) Veröffentlichungstag der Anmeldung: 23.02.2011
(73) Patentinhaber: Skoda Auto a.s., 293 60 Mladá Boleslav (CZ)
(72) Erfinder: Zdenek, Kohlert, 54901 Nove Mesto nad Metuji (CZ)

(56) Entgegenhaltungen:
- WO-A1-2008/117764
- DE-A1- 19 815 466
- FR-A1- 2 726 795
- FR-A1- 2 914 887
- FR-A1- 2 915 938
- US-A1- 2009 074 547

## Beschreibung

### Technisches Gebiet

Die Erfindung betrifft einen verschiebbaren Ladeboden, insbesondere einen verschiebbaren Ladeboden im Kofferraum eines Personenkraftfahrzeuges.

### Bisheriger Stand der Technik

Die Länge des Kofferraumes wird bei heutigen Personenkraftfahrzeugen in der Bemühung um möglichst größtes Volumen ständig verlängert. Die Entfernung des Kofferraumendes, das in der Regel durch die Hintersitzlehnen gebildet wird, von der Ladeöffnung verlängert sich über das vom Nutzer komfortabel erreichbaren Maß. Um das Ende zu erreichen, muss er sich erheblich nach innen vorbeugen und strecken und nicht selten wird er infolge der Berührung mit dem verschmutzten hinteren Stoßfänger dabei beschmiert. Deshalb werden verschiebbare Ladeböden eingesetzt, die enger als die Ladeöffnung sind und der Nutzer kann diese zu sich bzw. wenigstens teilweise über die Ladeöffnung herausziehen. Das Gepäck und die am Ladeboden abgelegten Gegenstände werden somit einfach in die Griffweite des Nutzers verschoben. Diese verschiebbaren Ladeböden werden entweder über die Ladekante angeordnet, wenn deren Verschiebungsweg ganz frei ist, oder im Gegenteil unter die Ladekante - in solchem Fall können sie angehoben werden, wenigstens im hinteren Teil, der in der Regel an den horizontalen Führungsflächen nur abgelegt ist. In solchem Fall ist der verschiebbare Ladeboden auch leicht herausnehmbar. Für einfacheres Handling und die Platzeinsparung bei Lagerung kann der Ladeboden aus mehreren Bodenplatten bestehen, die gegenseitig schwenkbar verbunden sind.

Der Nachteil der bisher verwendeten verschiebbaren Ladeböden ist die fehlende Sperre gegen den Sturz der Gegenstände beim Ausziehen des Ladebodens durch den Nutzer. Insbesondere kleine Gegenstände (z.B. PET-Flaschen, Regenschirme,...), die am Ende der Bodenplatte abgelegt werden, können leicht vom verschiebenden Boden abrutschen.

Eine im Dokument JP 2002-166781A beschriebene Lösung ist bekannt, wo zum verschiebbaren Ladeboden ein Quernetz mit seiner Unterseite befestigt ist, das mit seinen oberen Aufnahmen an der Kofferraumverkleidung befestigt ist.

Weiter ist die unter DE 10 2005 030 0386 A1 beschrieben Lösung bekannt, wo zum vorderen Ende des Ladebodens ein Kasten mit Netzrollo angebracht ist, dessen oberes Ende mittels Halter an die Hintersitzlehnen befestigt ist.

Nachteil solcher Lösungen ist die Notwendigkeit die Halter zu lösen, um den Ladeboden herauszunehmen oder das Ladegut nach Abklappen der Sitzlehnen laden zu können und derer Unansehnlichkeit.

Die Dokumente US 2009/074547 A1 und FR 2 726 795 A1 offenbaren einen verschiebbaren Ladeboden, insbesondere einen verschiebbaren Ladeboden im Kofferraum eines Personenkraftfahrzeuges, der mindestens eine Bodenplatte umfasst, die in Führung von ihrer vorderer Endstellung nach hinten zur Ladeöffnung verschiebbar ist. Zu einer Vorderkante der Bodenplatte ist eine Klappe schwenkbar zugeordnet.

### Darstellung der Erfindung

Die Aufgabe wird durch ein System eines ausbaubaren Ladebodens gemäß dieser Erfindung gelöst. Der verschiebbare Ladeboden umfasst wenigstens eine Bodenplatte, die in der Führung im Kofferraum von ihrer vorderen Endposition rückwärts zur Ladeöffnung verschiebbar ist. An der Vorderkante der Bodenplatte ist schwenkbar eine Klappe angebracht, die zwischen einer horizontalen Stellung, in der sie im Grunde in der Ebene der Bodenplatte liegt, und einer ausgeklappten Stellung, in der sie mit dieser Ebene einen stumpfen oder im Grunde rechten Winkel einschließt, verstellbar ist. In der vorderen Endposition des Ladebodens befindet sich die Klappe in einer horizontalen Stellung und außerhalb dieser in der ausgeklappte Stellung, vgl. z.B. US 2009/0074547 A1. In der Endposition des Ladebodens bildet die Klappe ein Bestandteil des Ladebodens und hindert nicht der eventueller Beladung mit einem längeren und volumigeren Gepäck nach Abklappen der Hintersitzlehnen. Beim Anziehen des Ladebodens vom Nutzer wird die Klappe selbsttätig in die ausgeklappte Stellung ausgeklappt und bildet so eine Sperre gegen Fall der Gegenstände aus dem vorderen Bodenende nach unten. Die Klappe kann vorteilhaft im Wesentlichen gleiche Breite wie die Bodenplatte haben, womit ein Fall der Gegenstände entlang der ganzen Breite des Ladebodens vermieden wird. Die Klappe kann auch breiter als die Bodenplatte sein, dies kann vorteilhaft z.B. in dem Fall sein, wenn der verschiebbare Ladeboden nicht die ganze Breite des Kofferraumes einnimmt und seitlich noch feste, in gleicher Ebene liegende Bodenteile sind. Die Klappe erstreckt sich dann im Wesentlichen über die ganze Breite des Kofferraumes zwischen seiner seitlichen Verkleidungen und ist so angeordnet, damit sie sich bei Verschiebung mit ihren überragenden Teilen oberhalb der festen Bodenteile bewegt.

Die Klappe kann vorteilhaft zu der Bodenplatte mittels eines Scharniers befestigt sein, dessen Schwenkachse in dem Bereich der Sichtseite, also der Oberseite der Bodenplatte liegt. Die Sichtseiten der Klappe sowie der Bodenplatte können mit einem gemeinsamen Streifen des Verkleidungsmaterials bezogen sein und das Scharnier ist durch dieses Verkleidungsmaterial gebildet, in der Regel einen Teppich, der entsprechend biegsam und dabei elastisch ist. Das Verkleidungsmaterial kann in dem Scharnierbereich auch noch verstärkt sein.

Die Klappe weist nach der Erfindung an ihrer Rückseite mindestens einen Vorsprung auf und die Führung weist im Bereich, der der Stellung des Vorsprungs in der vorderen Endposition des Ladebodens entspricht, eine Aussparung für diesen Vorsprung auf. In der Endstellung des Ladebodens versinkt der Vorsprung in die Aussparung und ermöglicht somit das Zuklappen der Klappe in die horizontale Stellung, bei Verschiebung des Ladebodens nach hinten gerät der Vorsprung jedoch außerhalb der Aussparung und stützt sich an der Führung ab, wodurch er die Klappe nach oben in die Schwenkstellung ausklappt.

Die Führung kann mindestens eine horizontale Fläche aufweisen, welche die Bodenplatte von der Rückseite abstützt. Diese horizontale Fläche ist vorne mit einer Vorderkante beendet, welche in die Aussparung übergeht und mit der Rückseite des Vorsprungs korrespondiert. Bei der Verschiebung des Ladebodens aus der Endstellung nach hinten stützt sich der Vorsprung zuerst mit seiner Rückseite an der Vorderkante ab und bei fortschreitende Verschiebung rutscht die Rückseite des Vorsprungs und verschwenkt sich um diese Kante. Bei unveränderter Höhe des Scharniers über der horizontalen Fläche der Führung wird die Klappe so in die ausgeklappte Stellung ausgeklappt. In die voll ausgeklappte Stellung kommt die Klappe nach dem Ausfahren des ganzen Vorsprungs aus der Aussparung und seinem Auffahren auf die horizontale Fläche. Der Vorsprung ist entsprechend seiner Formgebung mit seinem Ende oder seiner Rückseite vorteilhaft im Kontakt mit der horizontalen Fläche. Diese Berührungsflächen sind für die Gleitbewegung an der horizontalen Fläche geeignet verformt. In einer vorteilhaften Ausführung ist die Entfernung der Endkante des Vorsprungs von der Scharnierachse des Scharniers, in der mit der Sichtfläche der Klappe parallel verlaufenden Ebene, im Wesentlichen gleich oder kleiner als die Höhendistanz der Scharnierachse von der horizontalen Fläche. Die Endkante stützt sich dann in der ausgeklappte Stellung der Klappe an der horizontalen Fläche ab und der Schwenkwinkel der Klappe ergibt sich als Differenz dieser Distanzen.

In einer vorteilhaften Ausführung hat der Vorsprung im Wesentlichen die Form eines Winkelhebels, der mit einem Arm mit der Rückseite der Klappe verbunden ist, wobei der zweite Arm die Klappe in Richtung über die Scharnierachse überragt und mit dem ersten Arm einen stumpfen Winkel einschließt. In der horizontalen Stellung der Klappe ist der zweite Arm nach unten und hinten ausgerichtet und kann teilweise bis unter die Bodenplatte eingreifen.

Die Vorderkante der horizontalen Fläche, die mit der Rückseite des Vorsprungs korrespondiert, ist abgekantet und schließt mit der horizontalen Fläche einen spitzen Winkel ein. Dieser spitze Winkel entspricht dem Winkel zwischen dem zweiten Hebelarm und der horizontalen Fläche in der horizontalen Stellung der Klappe und im Wesentlichen ergänzt diesen zu 180°. Dies ermöglicht das Zuklappen der Klappe in eine horizontale Stellung bei Verschiebung nach vorne und die Frontfläche bleibt dabei in der Nähe der Rückseite des Hebels, was die Einleitung des Ausklappen der Klappe bereits bei kleiner Verschiebung des Ladebodens nach hinten ermöglicht.

Die Führung vor der Aussparung weist einen mit der Vorderseite des Vorsprungs korrespondierenden Anschlag auf. Der Anschlag liegt vorteilhaft höher als die horizontale Fläche, jedoch tiefer als die Scharnierachse. Bei der Verschiebung des Ladebodens nach vorne ist der Vorsprung vor der Erreichung der Endstellung des Ladebodens von der horizontalen Fläche in die Aussparung verschoben. Die Klappe kann mit ihrem Eigengewicht und durch die Elastizität des Teppichs beginnen, sich aus der ausgeklappte in die horizontale Stellung zu zuklappen. Die Vorderseite des Vorsprungs stoßt auf den Anschlag an und bei weiterem Verschiebung des Ladebodens in seine Endstellung rutscht die Vorderseite des Vorsprungs über den Anschlag und zuklappt die Klappe in die horizontale Stellung, die in der Endstellung des Ladebodens erreicht ist. Die Vorderseite des Vorsprungs stützt sich in der Endstellung am Anschlag ab und drückt so das vordere Ende der Klappe nach unten, die Klappe ist von unten mit einem Teil der Führung oder z.B. einer den Raum unter dem verschiebbaren Ladeboden abschließende Trennwand unterspreizt.

Zwischen der Bodenplatte und der Klappe ist vorteilhaft ein elastisches Element angeordnet, das die Klappe nach oben schwenkt. Dies ist vorteilhaft insbesondere in dem Fall, wenn der Ladeboden ausbaubar ist - die Klappe bleibt so auch nach dem Ausbau dank der Vorspannung der Feder in mindestens teilweise ausgeklappter Stellung, was die Ergreifung bei der Verlegung des Ladebodens beim Einbau ins Fahrzeug erleichtert. Der Nutzer greift in der Regel den Ladeboden beim Handling mit einer Hand an der vorderen und mit der zweiten Hand an der hinteren Kante - sollte die Klappe mit ihrem Gewicht in der horizontalen Stellung eingeschwenkt sein, könnte infolge derer Ausschwenkung beim Heben des Ladebodens durch Nutzer zum Abrutschen der Hand und zur Verletzung kommen.

Das elastische Element kann eine vorgespannte Torsionsfeder im Wesentlichen mit einer "U"-Form sein, derer Arme im freien Zustand gegeneinander winkelversetzt angeordnet sind. Die Feder ist im Bereich des vorderen Endes der Bodenplatte angebracht, die einen senkrechten Längsschlitz für die Winkelbewegung des ersten Armes der Feder aufweist. Der erste Arm überragt über das vordere Ende der Bodenplatte bis vor der Scharnierachse und der zweite Arm der Feder ist an der Bodenplatte angebracht. Die Klappe weist eine Stütze auf, die mit dem ersten Arm der Feder korrespondiert, der auf sie von unten drückt. Die Stütze ist vorteilhaft ein Bestandteil des Vorsprungs. Damit wird eine einfache Konstruktion erzielt.

In einer vorteilhaften Ausführung ist die Stütze so angeordnet, dass ein Berührungspunkt der Stütze mit der Feder in der horizontalen Stellung der Klappe in einer Querebene liegt, die durch die Scharnierachse durchläuft und senkrecht zum ersten Arm der Feder ist, oder hinter dieser Ebene, und dass der Berührungspunkt sich beim Ausklappen der Klappe aus dieser Stellung vor diese Ebene verschiebt. Dadurch entwickelt die Feder in der horizontalen Stellung der Klappe keinen Moment, der diese Klappe ausklappen würde evtl. entwickelt einen geringeren Moment, der die Klappe zuklappt und sie so in der horizontalen Stellung hält. Beim Ausklappen der Klappe in die ausgeklappte Stellung, infolge der Berührung der Rückseite des Vorsprungs mit der vorderen Kante der horizontalen Fläche, vergrössert sich die wirkende Armkraft von der Feder und somit auch der Ausklappmoment der Klappe. Die größte Distanz der Stütze von der Ebene der Scharnierachse ist bei der maximalen Ausklappung der Klappe erreicht. Damit nicht zum Umklappen der Klappe in einen spitzen Winkel mit der Sichtseite der Bodenplatte kommt, kann der erste Arm der Feder einen Anschlag für die Stütze aufweisen, der den maximalen Winkel der Ausklappung der Klappe eingrenzt.

Die Führung des Ladebodens kann von oben offen sein, womit der Ladeboden leicht ausbaubar ist. In der Führung liegt er mit dem Eigengewicht der durch horizontale Flächen abgestützten Bodenplatten.

Die Führung ist vorteilhaft in der Seitenverkleidung des Kofferraumes ausgestaltet und stützt die Bodenplatten an ihren Rändern ab. Die Klappe kann dann zwei Vorsprünge an ihren Rändern aufweisen. Solche Lösung ist raumsparend und stellt eine gleichmäßige Ausklappung der Klappe entlang ihrer ganzen Länge sicher.

Der Ladeboden kann mehrere Bodenplatten umfassen, die gegenseitig schwenkbar mit horizontalen Scharniere verbunden sind, die Klappe ist dann an der Vorderkante der von der Ladeöffnung weitentfernteste Bodenplatte angebracht. Solch Ladeboden kann nach Ausbau zusammengeklappt werden, was das Handling und die Lagerung erleichtert.

### Übersicht der Figuren der Zeichnungen

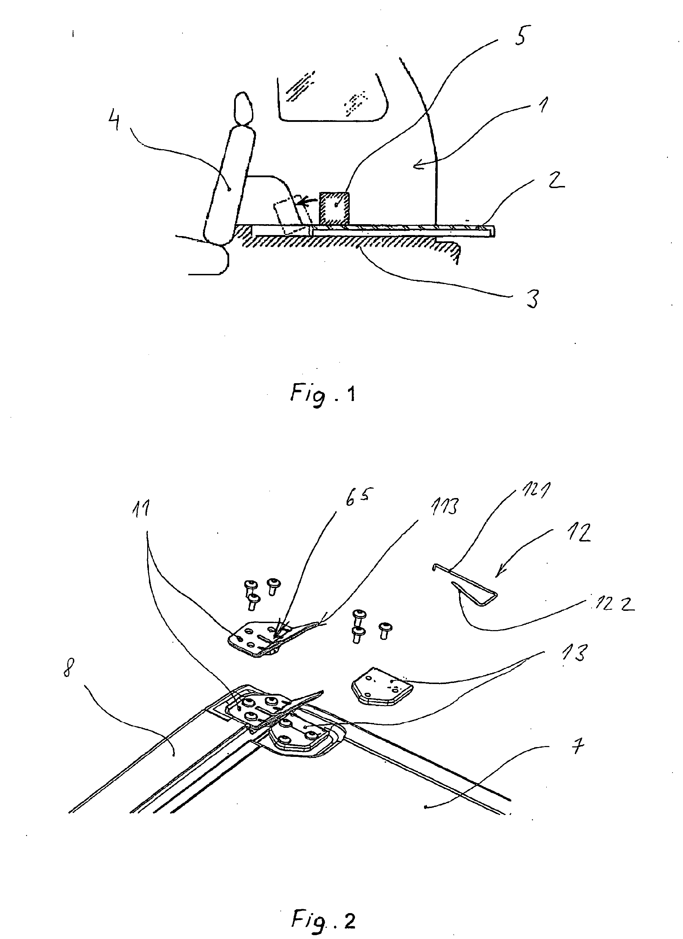

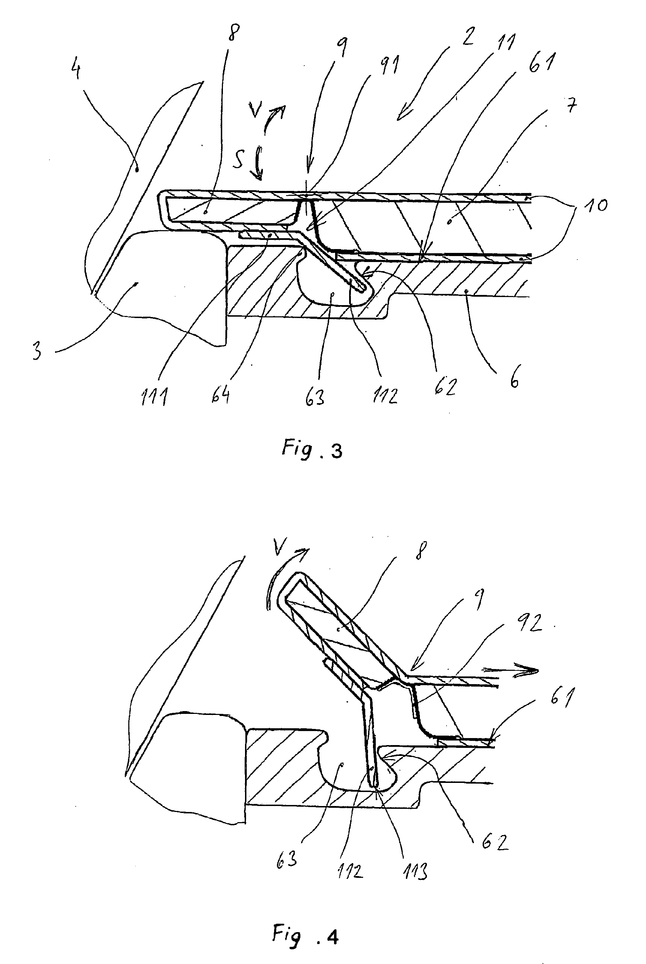

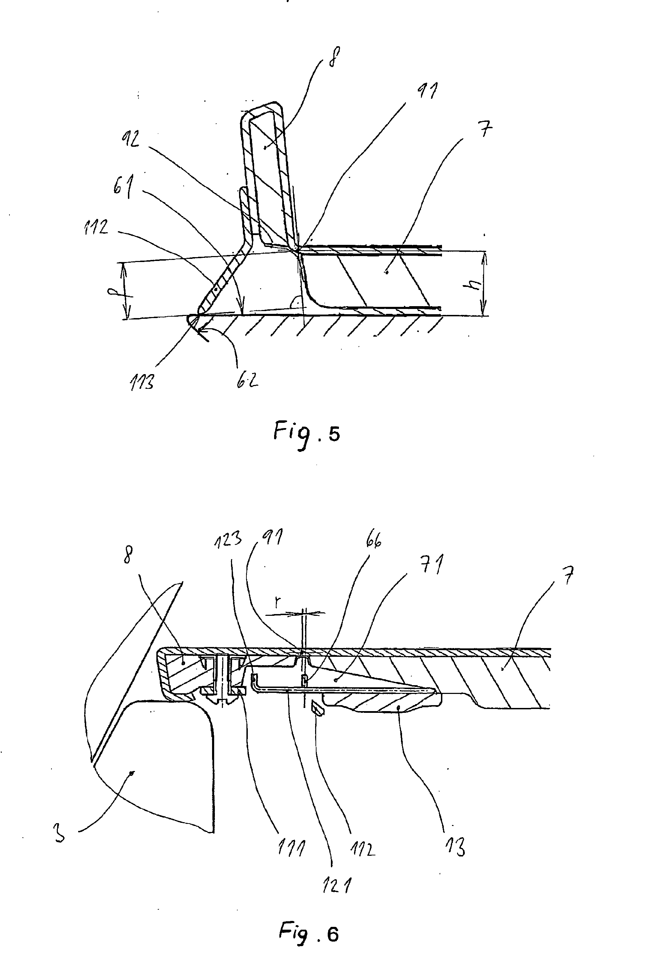

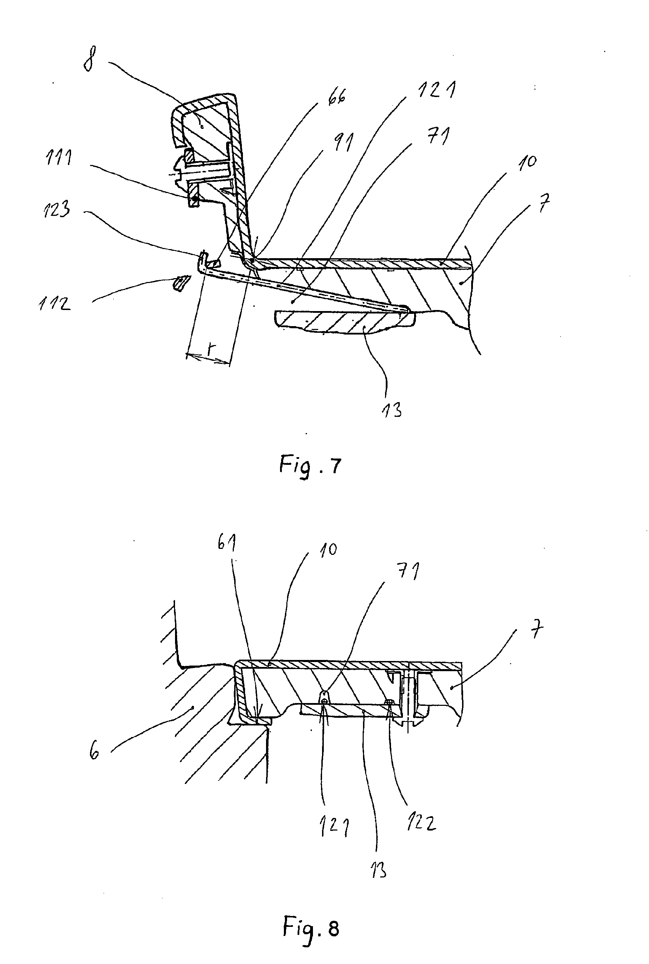

In der Fig. 1 ist ein Kofferraum eines Personenkraftfahrzeuges mit einem verschiebbaren Ladeboden entsprechend dem Stand der Technik dargestellt. In der Fig. 2 ist die Gesamtansicht auf die erfindungsgemäße Bodenplatte mit einer Klappe von der Rückseite dargestellt. Fig. 3 stellt den vertikalen Längsschnitt des erfindungsgemäßen Ladebodens im Bereich des Vorsprungs und die Führung bei der horizontalen Stellung der Klappe dar, Fig. 4 bei dem Ausklappen der Klappe und Fig. 5 in der ausgeklappte Stellung der Klappe. Fig. 6 stellt den vertikalen Längsschnitt des erfindungsgemäßen Ladebodens im Bereich der Stütze und des ersten Federarms bei der horizontalen Stellung der Klappe dar und Fig. 7 in der ausgeklappte Stellung der Klappe. In der Fig. 8 ist der vertikale Querschnitt des Ladebodens im Bereich der Feder.

### Ausführungsbeispiel der Erfindung

In der Fig. 1 ist der verschiebbare Ladeboden entsprechend dem Stand der Technik dargestellt. Im Kofferraum **1** ist verschiebbar über dem Basisboden **3** ein verschiebbarer Ladeboden **2** angeordnet. An seinem vorderen Ende ist der Kofferraum durch Hintersitzlehnen **4** abgegrenzt. Beim Verschieben des verschiebbaren Ladebodens **2** nach hinten kann infolge der Trägheitskraft ein Gegenstand **5** von ihm auf den Basisboden **3** herunterfallen.

In den beigefügten Figuren ist einer der möglichen Ausführungsbeispiele der Erfindung dargestellt. In der Fig. 3 ist der Vorderbereich des verschiebbaren Ladebodens **2** in seiner vorderen Endstellung dargestellt. Der verschiebbare Ladeboden **2** liegt in der Führung **6,** die seitlich des Kofferraumes ausgebildet ist und den verschiebbaren Ladeboden an seinen parallel mit der Schubrichtung verlaufenden Seiten unterstützt. Die Führung **6** ist von oben offen und der verschiebbare Ladeboden **2** kann nach oben ausgebaut werden. Vor der Bodenplatte **7** ist eine Klappe **8** angeordnet, die im Wesentlichen gleich breit ist, jedoch wesentlich kürzer und schmaler. Die Bodenplatte **7** und Klappe **8** weisen einen gemeinsamen Bezug **10** auf, der derer Sichtseite, Seiten und teilweise auch die Rückseite bedeckt. Der Bezug **10** kann an beiden Teilen aufgeklebt oder anders befestigt sein, es kann ein Teppich, Linoleum u.ä. sein. Dank seiner Elastizität bildet der Bezug **10** zwischen der Bodenplatte **7** und der Klappe **8** einen Scharnier **9,** dessen Achse **91** horizontal und quer verläuft und im Wesentlichen in der Ebene der Sichtfläche der Bodenplatte **7** liegt. Die Bodenplatte **7** ist an ihren Rändern von der Rückseite durch horizontale Flächen **61** der Führung **6** abgestützt. Die Klappe **8** weist an ihren Rändern an der Rückseite ein Paar von Hebeln **11** auf, die mit ihrem ersten Arm **111** an die Klappe **8** befestigt sind. Der erste Arm **111** kann an die Klappe angeschraubt, angenietet, angeklebt usw. sein. Im Weiteren wird die Anordnung lediglich an einer Seite beschrieben, wobei die andere spiegelbildlich gestaltet ist.

Der zweite Arm **112** des Hebels **11** schließt mit dem ersten Arm **111** einen stumpfen Winkel ein und ist nach hinten und unten in Richtung hinter die Scharnierachse **91** ausgerichtet, greift bis unter die Bodenplatte **7** und horizontale Fläche **61** ein. In der Führung **6** ist eine Aussparung **63** ausgebildet, in die mit einem Spiel der zweite Arm **112** einsinkt. Die Aussparung **63** geht vorne in einen Anschlag **64** über, der nach hinten über die Aussparung **63** hinausragt und höher als die horizontale Fläche **61** liegt. Der zweite Arm **112** stützt sich mit seiner Vorderseite am Anschlag **64** ab, der ihm nach hinten drückt und da er unter der Scharnierachse **91** wirkt, bemüht sich so die Klappe **8** um den Scharnier **9** in Richtung **S** zu verschwenken. Die Klappe **8** stützt sich mit ihrer Vorderseite am erhöhten Teil des Basisbodens **3** ab, der ihre horizontale Stellung abgrenzt. Die horizontale Fläche **61** ist vorne mit einer Vorderkante **62** abgeschlossen, die in eine Aussparung **63** übergeht.

In der Fig. 4 ist die Situation bei geringerer Verschiebung des verschiebbaren Ladebodens **2** nach hinten dargestellt. Der zweite Arm **112** stützt sich mit seiner Rückseite an der Vorderkante **62** ab und bei weiterer Verschiebung rollt der Arm mit seiner Rückseite und rutscht um die Vorderkante **62** vorbei, wobei sich die Scharnierachse **91** immer in gleicher Höhe über der horizontalen Fläche **61** bewegt. Die Klappe **8** dreht sich so um das Scharnier **9** in Richtung **V** in ihre ausgeklappte Stellung. Die Vorderkante **62** ist abgekantet und schließt mit der horizontalen Fläche **61** einen spitzen Winkel ein. Dadurch liegt die Vorderkante **62** bei der horizontalen Stellung der Klappe **8** dicht an der Rückseite des zweiten Armes **112** an und das Ausklappen der Klappe **8** beginnt bereits bei sehr geringerer Verschiebung des Ladebodens **2** aus seiner Endstellung.

In der Fig. 5 ist die Situation nach voller Ausklappung der Klappe **8** dargestellt. Der zweite Arm **112** des Hebels **11** ist bereits außerhalb der Vorderkante **62** verschoben worden und sein Ende **113** auf die horizontale Fläche **61** aufgefahren ist und stützt sich an ihr ab. Bei weiterer Verschiebung des verschiebbaren Bodens 2 nach hinten rutscht dieser an dieser Fläche und hält so die Klappe **8** in der ausgeklappte Stellung. Die Gegenstände können also nicht über das vordere Ende des Ladebodens überfallen. Die Klappe **8** schließt mit der Bodenplatte einen stumpfen Winkel ein, dem rechten Winkel nah. Dieser Winkel ergibt sich aus der Länge des zweiten Armes **112** bzw. der Distanz **p** seines Ende **113** von der Scharnierachse **91.** Wenn die Distanz **p** im Grunde gleich wie die Höhendistanz **h** der Scharnierachse **91** über der horizontalen Fläche **61** ist, schließt die Klappe **8** mit der Bodenplatte **7** den rechten Winkel ein. Bei **p<h** ist der Winkel der Ausklappung kleiner als 90°.

Der Hebel **11** ist aus Kunststoff ausgebildet und hat die Form einer im stumpfen Winkel geknickten flachen Platte, wobei der zweite Arm **112** sich nach hinten verengt und die Breite seines Ende **113** der Breite der horizontalen Fläche **61** entspricht, an der er rutscht.

Das Scharnier **9** ist von der Rückseite mit einer Strebe **92** versteift, die an die Klappe **8** sowie Bodenplatte **7** befestigt ist und den Scharnier vor einer Beschädigung infolge möglicher Trennung des Bezugs **10** von den Sichtseiten beider verbundenen Teile schützt. Die Verschiebung der Bodenplatte **7** an der horizontalen Fläche **61** ist dank des Überziehens des Bezugs **10** bis an die Rückseite in die mit der Führung **6** korrespondierende Bereiche erleichtert.

Zum vorderen Ende der Bodenplatte **7** ist von der Rückseite mittels einer Beilage **13** horizontal eine Torsionsfeder **12** befestigt. Die Feder **12** ist aus Draht ausgebildet und hat die Form des Buchstaben "U" mit einem Arm kürzeren als dem zweiten Arm, wobei beide Arme in der Ruhelage gegeneinander winkelgedreht sind und in der Längsrichtung liegen. Der erste Arm **121** der Feder ist länger und ragt über das vordere Ende der Bodenplatte **7** bis unter die Klappe **8** aus, der zweite Arm **122** ragt über die Bodenplatte **7** nicht aus. An der Rückseite der Bodenplatte **7** ist eine flache Nut für die Feder **12** ausgebildet, die im Bereich für den ersten Arm **121** der Feder in einen Längsschlitz **71** vertieft ist. Der Schlitz **71** ist senkrecht und seine Tiefe vergrößert sich zum Ende des ersten Federarmes **121,** dadurch wird seine Bewegung nach oben infolge der Vorspannung der Feder **12** ermöglicht. Der zweite Federarm **122** wird mit der Beilage **13** zur Bodenplatte gedrückt. Die Beilage **13** ist zur Bodenplatte angeschraubt, angenietet, angeklebt u.ä.

In der Fig. 6 und 7 ist der vertikale Längsschnitt des Bereiches der Klappe an der Stelle des ersten Federarmes **121** dargestellt. Der Hebel **6** weist einen Längsausschnitt **65** für den ersten Arm **121** auf. Über diesen Ausschnitt ist im Hebel eine Stütze **66** ausgestaltet, auf die von unten der erste Arm **121** drückt. In der horizontalen Stellung der Klappe **8** liegt der Berührungspunkt der Stütze **66** und des ersten Armes **121** hinter der Scharnierachse, deshalb wird die Klappe **8** in Richtung **S** geschwenkt und mit ihrem vorderen Ende zum erhöhten Teil des Basisbodens **3** gedrückt. Die Feder **12** wirkt in dieser Stellung auf die Stütze mit der Höchstkraft, wegen des kleinen Kraftarms **r** gegenüber der Scharnierachse **91** ist der resultierende Drehmoment jedoch klein. Bei Verschiebung der Stütze **66** direkt unter die Scharnierachse **91** ist dann der Arm **r** und somit auch Drehmoment Null. Bereits bei kleinem Winkel der Ausklappung der Klappe **8** schiebt sich die Stütze **66** vor die Scharnierachse **91** und die Kraft vom ersten Federarm **121** hilft dem Ausklappen in Richtung **V** in die ausgeklappte Stellung der Klappe. Bei dem Ausklappen vergrößert sich der Arm **r** der Kräftewirkung der Feder **12** in der Stütze **66** gegen die Scharnierachse **91** und die Höchstwerte sind bei der vollen Ausklappung der Klappe erreicht. Trotz der sich verringernden Kraft von der Feder **12** wird ein ausreichender Drehmoment beibehalten und die Klappe **8** ist in der mindestens teilweise ausgeklappte Stellung auch nach Ausbau des Ladebodens aus dem Fahrzeug gehalten, wenn das Ende **113** des zweiten Armes **112** des Hebels nicht im Kontakt mit der horizontalen Fläche **61** ist und die Klappe **8** dank ihrem Gewicht und der Elastizität des Bezugs **10** nach Zuklappen in die horizontale Stellung strebt. Dadurch kommt es beim Wiedereinbau des verschiebbaren Bodens **2** nach dem Ablegen in die Führung **6** zur keinen Beschädigung des Hebels **11.** Das Ende **113** des zweiten Hebelarmes **112** setzt wieder auf die horizontale Fläche **61** auf und verschwenkt eventuell die Klappe **8** in die voll ausgeklappte Stellung. Bei nachfolgender Verschiebung des verschiebbaren Ladebodens **2** nach vorne noch vor Erreichung seiner Endstellung rutscht das Ende **113** des zweiten Hebelarms **112** aus der horizontalen Fläche in die Aussparung **63** ein und die Klappe **8** klappt sich teilweise durch das Eigengewicht und die Elastizität des Bezugs **10** zu. Der vollen Zuklappung hindert die Feder **12.** Danach stoßt der zweite Arm **112** des Hebels **11** mit seiner Vorderseite auf den Anschlag **64** und die Klappe wird mit dem Rutschen und Drehen des zweiten Hebelarmes**112** am Anschlag **64** um den Scharnier **9** in die horizontale Stellung eingeschwenkt.

Der erste Federarm **121** ist an seinem Ende senkrecht so gebogen, dass er den Anschlag **123** für die Stütze **66** bildet und so den maximalen Winkel der ausgeklappte Klappe **8** abgrenzt, damit sie nicht in einen spitzen Winkel gegenüber der Bodenplatte **7** verschwenkt wird.

Die im Text angeführten Richtungen und Ebenen entsprechen der üblich geltenden Terminen bei der Fahrzeugbeschreibung, als Vorderteil des Ladebodens wird der dem Vorderteil des Fahrzeuges näherliegende Teil bzw. der Ladeöffnung gegenüberliegende Teil gemeint.

### Industrielle Nutzbarkeit

Der erfindungsgemäße verschiebbare Ladeboden kann bei allen Fahrzeugen mit Koffer- oder Laderaum eingesetzt werden.

## Patentansprüche

1. Verschiebbarer Ladeboden, insbesondere ein verschiebbarer Ladeboden im Kofferraum eines Personenkraftfahrzeuges, der mindestens eine Bodenplatte (7) umfasst, die in Führung (6) von ihrer vorderer Endstellung nach hinten zur Ladeöffnung verschiebbar ist, **wobei** zu einer Vorderkante der Bodenplatte (7) schwenkbar eine Klappe (8) zugeordnet ist, die verstellbar zwischen einer horizontalen Stellung, in der sie im Grunde in der Ebene der Bodenplatte (7) liegt, und einer ausgeklappte Stellung, in der sie mit dieser Ebene einen stumpfen oder im Grunde rechten Winkel einschließt, wobei in der vorderen Endstellung des verschiebbaren Ladebodens (2) sich die Klappe (8) in der horizontalen Stellung und außerhalb dieser Endstellung des Ladebodens (2) in der ausgeklappten Stellung befindet, **dadurch gekennzeichnet, dass** die Klappe (8) an ihrer Rückseite mindestens einen Vorsprung (11) aufweist, wobei die Führung (6) in dem Bereich, der der Stellung des Vorsprungs (11) in der vorderen Endposition des verschiebbaren Ladebodens (2) entspricht, eine Aussparung (63) für diesen Vorsprung (11) aufweist

2. Verschiebbarer Ladeboden nach Anspruch 1, **dadurch gekennzeichnet, dass** die Klappe (8) zur Bodenplatte (7) mittels eines Scharniers (9) befestigt ist, dessen Drehachse (91) im Bereich einer Sichtfläche der Bodenplatte (7) liegt.

3. Verschiebbarer Ladeboden nach einem der vorangehenden Ansprüche, **dadurch gekennzeichnet, dass** Sichtseiten der Klappe (8) und der Bodenplatte (7) mit einem gemeinsamen Streifen eines Verkleidungsmaterials (10) bezogen sind, und dass das Scharnier (9) durch dieses Verkleidungsmaterial (10) gebildet ist.

4. Verschiebbarer Ladeboden nach den vorherigen Ansprüchen, **dadurch gekennzeichnet, dass** der Vorsprung (11) im Wesentlichen die Form eines Winkelhebels hat, dessen erster Arm (111) mit der Rückseite der Klappe (8) verbunden ist, wobei dessen zweiter Arm (112) die Klappe (8) in Richtung über die Scharnierachse (91) überragt und mit dem ersten Arm (111) einen stumpfen Winkel einschließt.

5. Verschiebbarer Ladeboden nach den Ansprüchen 1 oder 4, **dadurch gekennzeichnet, dass** die Führung (6) mindestens eine horizontale Fläche (61) aufweist, welche die Bodenplatte (7) von der Rückseite unterstützt, wobei die horizontale Fläche (61) vorne mit einer Vorderkante (62) abgeschlossen ist, die in eine Aussparung (63) übergeht und mit der Rückseite des Vorsprungs (11,112) korrespondiert.

6. Verschiebbarer Ladeboden nach dem Anspruch 5, **dadurch gekennzeichnet, dass** die Vorderkante (62) abgekantet ist und mit der horizontalen Fläche (61) einen spitzen Winkel einschließt.

7. Verschiebbarer Ladeboden nach den Ansprüchen 5 oder 6, **dadurch gekennzeichnet, dass** eine Entfernung (p) einer Endkante (113) des Vorsprungs (11) von der Scharnierachse (91), in einer mit der Sichtfläche der Klappe (8) parallel verlaufenden Ebene, im Grunde gleich oder kleiner als eine Höhendistanz (h) der Scharnierachse (91) von der horizontalen Fläche (61) ist, und dass die Endkante (113) in der ausgeklappte Stellung der Klappe (8) an die horizontale Fläche (61) anliegt.

8. Verschiebbarer Ladeboden nach einem der Ansprüche 5 bis 7, **dadurch gekennzeichnet, dass** die Führung (6) vor der Aussparung (63) einen Anschlag (64) aufweist, der mit der Vorderseite des Vorsprungs (11,112) korrespondiert.

9. Verschiebbarer Ladeboden nach dem Anspruch 8, **dadurch gekennzeichnet, dass** der Anschlag (64) zwischen der horizontalen Ebene der Scharnierachse (91) und der Ebene der horizontalen Fläche (61) liegt.

10. Verschiebbarer Ladeboden nach einem der vorangehenden Ansprüche, **dadurch gekennzeichnet, dass** zwischen der Bodenplatte (7) und der Klappe (8) ein elastisches Element (12) angeordnet ist, das die Klappe (8) verschwenkt, wobei das elastische Element (12) eine vorgespannte Torsionsfeder ist, im Grunde in Form "U", deren Arme (121, 122) im freien Zustand gegeneinander winkelversetzt sind

11. Verschiebbarer Ladeboden nach dem Anspruch 10, **dadurch gekennzeichnet, dass** die Feder (12) im Bereich des vorderen Ende der Bodenplatte (7) befestigt ist, die einen senkrechten Längsschlitz (71) für die Winkelbewegung des ersten Armes (121) der Feder aufweist, wobei dieser Arm (121) über das vordere Ende der Bodenplatte (7) bis vor die Scharnierachse (91) des Scharniers überragt und der zweite Arm (122) der Feder an die Bodenplatte (7) befestigt ist.

12. Verschiebbarer Ladeboden nach den Ansprüchen 10 oder 11, **dadurch gekennzeichnet, dass** die Klappe (8) eine Stütze (66) aufweist, die mit dem ersten Arm (121) der Feder korrespondiert.

13. Verschiebbarer Ladeboden nach dem Anspruch 12, **dadurch gekennzeichnet, dass** in der horizontalen Stellung der Klappe (8) der Berührungspunkt der Stütze (66) mit der Feder (12) in einer Querebene liegt, die durch die Scharnierachse (91) durchläuft und senkrecht zum ersten Arm (121) der Feder ist, oder hinter dieser Ebene, und dass beim Ausklappen der Klappe (8) aus dieser Stellung sich vor diese Ebene verschiebt.

## Claims

1. Slidable loading floor, in particular a slidable loading floor in the boot of a passenger motor vehicle, said loading floor comprising at least one floor plate (7) which is slidable in a guide (6) from the front end position thereof rearwards with respect to the loading opening, wherein a flap (8) is pivotably assigned to a front edge of the floor plate (7), said flap being adjustable between a horizontal position, in which the flap basically lies in the plane of the floor plate (7), and an unfolded position, in which said flap encloses an obtuse or basically right angle with said plane, wherein, in the front end position of the slidable loading floor (2), the flap (8) is in the horizontal position and, outside said end position of the loading floor (2), is in the unfolded position, **characterized in that** the rear side of the flap (8) has at least one projection (11), wherein the guide (6) has a recess (63) for said projection (11) in the region which corresponds to the position of the projection (11) in the front end position of the slidable loading floor (2).

2. Slidable loading floor according to Claim 1, **characterized in that** the flap (8) is fastened with respect to the floor plate (7) by means of a hinge (9), the axis of rotation (91) of which lies in the region of a visible surface of the floor plate (7).

3. Slidable loading floor according to either of the preceding claims, **characterized in that** visible sides of the flap (8) and of the floor plate (7) are covered by a common strip of a lining material (10), and **in that** the hinge (9) is formed by said lining material (10).

4. Slidable loading floor according to the preceding claims, **characterized in that** the projection (11) is substantially in the form of an angle lever, the first arm (111) of which is connected to the rear side of the flap (8), with the second arm (112) of said angle lever projecting over the flap (8) in a direction beyond the hinge axis (91) and enclosing an obtuse angle with the first arm (111).

5. Slidable loading floor according to Claim 1 or 4, **characterized in that** the guide (6) has at least one horizontal surface (61) which supports the floor plate (7) from the rear side, wherein the horizontal surface (61) is closed off at the front by a front edge (62) which merges into a recess (63) and corresponds with the rear side of the projection (11, 112).

6. Slidable loading floor according to Claim 5, **characterized in that** the front edge (62) is chamfered and encloses an acute angle with the horizontal surface (61).

7. Slidable loading floor according to Claim 5 or 6, **characterized in that** a distance (p) of an end edge (113) of the projection (11) from the hinge axis (91), in a plane running parallel to the visible surface of the flap (8), is basically the same as or smaller than a vertical distance (h) of the hinge axis (91) from the horizontal surface (61), and **in that**, in the unfolded position of the flap (8), the end edge (113) bears against the horizontal surface (61).

8. Slidable loading floor according to one of Claims 5 to 7, **characterized in that** the guide (6) has a stop (64) in front of the recess (63), the stop corresponding with the front side of the projection (11, 112).

9. Slidable loading floor according to Claim 8, **characterized in that** the stop (64) lies between the horizontal plane of the hinge axis (91) and the plane of the horizontal surface (61).

10. Slidable loading floor according to one of the preceding claims, **characterized in that** an elastic element (12) which pivots the flap (8) is arranged between the floor plate (7) and the flap (8), wherein the elastic element (12) is a pretensioned torsion spring, basically in the shape of a "U", the arms (121, 122) of which are angularly offset in relation to each other in the free state.

11. Slidable loading floor according to Claim 10, **characterized in that** the spring (12) is fastened in the region of the front end of the floor plate (7) which has a vertical longitudinal slot (71) for the angular movement of the first arm (121) of the spring, wherein said arm (121) projects beyond the front end of the floor plate (7) to in front of the hinge axis (91) of the hinge, and the second arm (122) of the spring is fastened to the floor plate (7).

12. Slidable loading floor according to Claim 10 or 11, **characterized in that** the flap (8) has a support (66) which corresponds to the first arm (121) of the spring.

13. Slidable loading floor according to Claim 12, **characterized in that**, in the horizontal position of the flap (8), the contact point of the support (66) with the spring (12) lies in a transverse plane which runs through the hinge axis (91) and is perpendicular to the first arm (121) of the spring, or behind said plane, and **in that**, when the flap (8) is unfolded out of this position, the contact point slides in front of said plane.

## Revendications

1. Fond de chargement déplaçable, en particulier fond de chargement déplaçable dans l'espace du coffre d'une voiture, qui comprend au moins une plaque de fond (7), qui peut être déplacée vers l'arrière dans un guide (6) depuis sa position avant finale en vue de l'ouverture de chargement, un volet (8) étant associé de manière pivotante à une arête avant de la plaque de fond (7), lequel volet peut être réglé entre une position horizontale dans laquelle il est essentiellement situé dans le plan de la plaque de fond (7) et une position redressée dans laquelle il forme avec ce plan un angle obtus ou essentiellement droit, le volet (8), dans la position avant finale du fond de chargement déplaçable (2), se trouvant dans la position horizontale et, en dehors de cette position finale du fond de chargement (2), se trouvant dans la position redressée, **caractérisé en ce que** le volet (8) présente au niveau de son côté arrière au moins une saillie (11), le guide (6) présentant un évidement (63) pour cette saillie (11) dans la région qui correspond à la position de la saillie (11) dans la position avant finale du fond de chargement déplaçable (2).

2. Fond de chargement déplaçable selon la revendication 1, **caractérisé en ce que** le volet (8) est fixé par rapport à la plaque de fond (7) au moyen d'une charnière (9) dont l'axe de rotation (91) est situé dans la région d'une face visible de la plaque de fond (7).

3. Fond de chargement déplaçable selon l'une quelconque des revendications précédentes, **caractérisé en ce que** des côtés visibles du volet (8) et de la plaque de fond (7) sont revêtus d'une bande commune d'un matériau d'habillage (10), et **en ce que** la charnière (9) est formée par ce matériau d'habillage (10).

4. Fond de chargement déplaçable selon les revendications précédentes, **caractérisé en ce que** la saillie (11) a essentiellement la forme d'un levier coudé dont le premier bras (111) est connecté au côté arrière du volet (8), son deuxième bras (112) faisant saillie au-delà du volet (8) dans la direction de l'axe de la charnière (91) et formant avec le premier bras (111) un angle obtus.

5. Fond de chargement déplaçable selon les revendications 1 ou 4, **caractérisé en ce que** le guide (6) présente au moins une surface horizontale (61) qui supporte la plaque de fond (7) depuis le côté arrière, la surface horizontale (61) se terminant à l'avant par une arête avant (62) qui se prolonge par un évidement (63) et qui correspond au côté arrière de la saillie (11, 112).

6. Fond de chargement déplaçable selon la revendication 5, **caractérisé en ce que** l'arête avant (62) est recourbée et forme un angle aigu avec la surface horizontale (61).

7. Fond de chargement déplaçable selon les revendications 5 ou 6, **caractérisé en ce qu'**un éloignement (p) d'une arête de bout (113) de la saillie (11) depuis l'axe de la charnière (91), dans un plan s'étendant parallèlement à la face visible du volet (8), est essentiellement inférieur ou égal à une distance en hauteur (h) de l'axe de la charnière (91) depuis la surface horizontale (61), et **en ce que** l'arête de bout (113), dans la position redressée du clapet (8), s'applique contre la surface horizontale (61).

8. Fond de chargement déplaçable selon l'une quelconque des revendications 5 à 7, **caractérisé en ce que** le guide (6) présente, avant l'évidement (63), une butée (64) qui correspond au côté avant de la saillie (11, 112).

9. Fond de chargement déplaçable selon la revendication 8, **caractérisé en ce que** la butée (64) est située entre le plan horizontal de l'axe de la charnière (91) et le plan de la surface horizontale (61).

10. Fond de chargement déplaçable selon l'une quelconque des revendications précédentes, **caractérisé en ce qu'**entre la plaque de fond (7) et le volet (8) est disposé un élément élastique (12) qui fait pivoter le volet (8), l'élément élastique (12) étant un ressort de torsion précontraint, essentiellement en forme de "U", dont les bras (121, 122) sont décalés angulairement l'un par rapport à l'autre à l'état libre.

11. Fond de chargement déplaçable selon la revendication 10, **caractérisé en ce que** le ressort (12) est fixé dans la région de l'extrémité avant de la plaque de fond (7), qui présente une fente longitudinale verticale (71) pour le mouvement angulaire du premier bras (121) du ressort, ce bras (121) dépassant au-delà de l'extrémité avant de la plaque de fond (7) jusqu'avant l'axe de la charnière (91) de la charnière et le deuxième bras (122) du ressort étant fixé à la plaque de fond (7).

12. Fond de chargement déplaçable selon les revendications 10 ou 11, **caractérisé en ce que** le volet (8) présente un support (66) qui correspond au premier bras (121) du ressort.

13. Fond de chargement déplaçable selon la revendication 12, **caractérisé en ce que** dans la position horizontale du volet (8), le point de contact du support (66) avec le ressort (12) est dans un plan transversal qui s'étend à travers l'axe de la charnière (91) et qui est perpendiculaire au premier bras (121) du ressort, ou derrière ce plan, et **en ce que**, lors du redressement du volet (8) hors de cette position, il se déplace devant ce plan.
